# EUROPÄISCHE PATENTSCHRIFT

(11) **EP 3 403 485 B1**
(45) Veröffentlichungstag und Bekanntmachung des Hinweises auf die Patenterteilung: **04.03.2020**
(21) Anmeldenummer: 18171230.8
(22) Anmeldetag: 08.05.2018
(51) Int. Cl.: A01D 41/127

(54) **SELBSTLERNENDE, KORREKTUREINGABEN BERÜCKSICHTIGENDE ANORDNUNG ZUR SELBSTTÄTIGEN KONTROLLE EINES ARBEITSPARAMETERS EINER ERNTEGUTFÖRDER- UND/ODER BEARBEITUNGSEINRICHTUNG**
SELF-LEARNING ASSEMBLY WHICH INCORPORATES CORRECTING INPUTS FOR AUTOMATIC CONTROLLING OF A WORK PARAMETER OF A CROP CONVEYOR AND/OR PROCESSING DEVICE
DISPOSITIF D'AUTO-APPRENTISSAGE, PRENANT EN CONSIDÉRATION LES ENTRÉES DE CORRECTION DESTINÉ AU CONTRÔLE AUTOMATIQUE D'UN PARAMÈTRE DE TRAVAIL D'UN DISPOSITIF DE TRANSPORT DE PRODUIT DE LA RÉCOLTE ET/OU DE TRAITEMENT

(30) Priorität: 18.05.2017 DE 102017208442
(43) Veröffentlichungstag der Anmeldung: 21.11.2018
(73) Patentinhaber: Deere & Company, Moline, IL 61265 (US)
(72) Erfinder: Münch, Dr. Philipp, 68163 Mannheim (DE); Peschke, Tobias, 68163 Mannheim (DE)
(74) Vertreter: Holst, Sönke

(56) Entgegenhaltungen:
- EP-A1- 1 269 823
- EP-A1- 2 510 777
- EP-A1- 2 681 984

## Beschreibung

Die Erfindung betrifft eine Anordnung zur selbsttätigen Kontrolle eines Arbeitsparameters einer Erntegutförder- und/oder-bearbeitungseinrichtung einer landwirtschaftlichen Erntemaschine, umfassend:
einen Sensor zur Erfassung von wenigstens einer Eigenschaft von Erntegut und/oder einer durch die Eigenschaft beeinflussten Größe,
eine Kontrolleinrichtung, die betreibbar ist, anhand der Signale des Sensors unter Anwendung eines Algorithmus sukzessive Steuersignale zur Ansteuerung eines Aktors zu bestimmen, welcher den Arbeitsparameter der mit dem sensierten Erntegut zusammenwirkenden Erntegutförder- und/oder-bearbeitungseinrichtung beeinflusst,
und eine Schnittstelle zur Eingabe von Korrektureingaben für den Arbeitsparameter durch einen das Arbeitsergebnis der Erntegutförder- und/oder-bearbeitungseinrichtung überwachenden Beobachter,
wobei die Kontrolleinrichtung mit der Schnittstelle verbunden und betreibbar ist, die dem Aktor zugeführten Kontrollsignale anhand der empfangenen Korrektureingaben zu übersteuern, sowie eine damit ausgestattete Erntemaschine und ein entsprechendes Verfahren.

### Stand der Technik

Landwirtschaftliche Mähdrescher werden bei der Ernte von Körnerfrüchten eingesetzt, um auf einem Feld angebaute Pflanzen mittels eines Erntevorsatzes zu ernten, durch einen Schrägförderer ins Innere des Mähdreschers zu fördern und dort zu dreschen. Das ausgedroschene Erntegut wird anschließend noch durch eine Trenneinrichtung bearbeitet. Das im Dresch- und Trennprozess gewonnene Korn wird in einer Reinigungseinrichtung gereinigt und in einem Korntank abgelegt, aus dem es schließlich auf ein Transportfahrzeug überladen wird.

Bei einem Mähdrescher sind eine Vielzahl von Arbeitsparametern von Erntegutförderungselementen und Erntegutbearbeitungselementen nicht fest vorgegeben, sondern einstellbar, um eine Anpassung an die Erntegutart und die jeweiligen Erntebedingungen zu ermöglichen. Beispiele hierfür sind neben der Vortriebsgeschwindigkeit des Mähdreschers die Schnitthöhe seines Schneidwerks, die Drehgeschwindigkeit und die vertikal und horizontale Position einer Haspel, die Dreschtrommeldrehzahl und der Dreschkorbabstand eines Tangential- oder Axialdreschwerks und Reinigungseinstellungen, wie Gebläsedrehzahl und Sieböffnungen des Ober- und Untersiebs. Ggf. können auch Einstellungen eines Strohhäckslers variiert werden. Ohne Automatisierung wäre ein Bediener auf seine Erfahrung oder einschlägige Handbücher angewiesen, um möglichst gute Einstellungen durchführen und den Mähdrescher zu können, was jedoch ungeübtem Personal, wie es in vielen Fällen bei der Ernte eingesetzt wird, mangels Erfahrung kaum möglich ist.

In der Vergangenheit wurden daher Automatisierungen vieler Bereiche des Mähdreschers vorgeschlagen, beispielsweise zur Höhensteuerung einer Haspel (EP 2 681 984 A1), die auf Sensorwerten für die Bestandshöhe und für die aktuelle Höhe der Haspel beruhen und die Höhe der Haspel selbsttätig verstellen. Analog wurde vorgeschlagen, Reinigungseinstellungen abhängig von Erntebedingungen und Zielvorgaben aus einem Datenspeicher abzurufen. Die von der Automatik ausgegebenen Einstellwerte beruhen üblicherweise auf Einstellungen, die ein erfahrener Bediener bei ähnlichen Bedingungen vornehmen würde oder die der jeweilige Fahrer für sich selbst zur späteren Wiederverwendung abgespeichert hat (EP 0 928 554 A1), oder die sich aus einem ausgeprägten Benutzerverhalten einer Vielzahl von Fahrern ableiten lässt (DE 103 29 932 A1). Die im Stand der Technik verwendete Vorgehensweise, anhand von Sensorwerten bestimmte Eigenschaften von Erntegut zu erfassen und anhand vorbestimmter Algorithmen einen Aktor einzustellen, hat jedoch den Nachteil, dass die Sensoren nicht immer hinreichend genau arbeiten oder manche die Förderung und/der Bearbeitung des Ernteguts beeinflussenden Parameter nicht oder nur unzureichend durch einen Sensor erfasst werden können, was dazu führt, dass die auf dem Sensorwert basierende Einstellung des Arbeitsparameters in der Praxis nicht immer zu optimalen Arbeitsergebnissen bei der Ernte führen.

Man stellt aus diesem Grunde üblicherweise Bedienerschnittstellen bereit, mit denen ein Bediener einen von einer sensorbasierten Automatik kontrollierten Arbeitsparameter übersteuern oder feinabstimmen kann (EP 0 928 554 A1). Der Bediener stellt sozusagen einen Beobachter dar, der das Ergebnis der Erntegutförderung und/oder Erntegutbearbeitung observiert und entsprechende, ggf. korrigierende Rückkopplungseingaben in die Steuerung liefert. Als Beobachter für das besagte Ergebnis kann auch ein Sensor dienen, wie ein Verlustsensor im Falle einer Reinigungseinstellung (EP 3 141 102 A1) oder eine Kamera zur Beobachtung des Erntegutflusses in einem Schneidwerk (EP 2 143 316 A1).

Die Eingaben des Beobachters dienen üblicherweise als Rückkopplungswerte, die lediglich dazu dient, die von der sensorbasierten Automatik ausgegebenen Einstellwerte zu übersteuern oder zu korrigieren, ändern jedoch den von der sensorbasierten Automatik verwendeten Algorithmus nicht ab. Der Algorithmus lernt demnach nicht von den Eingaben des Beobachters und wird nicht verbessert.

Außerdem kann sich der Algorithmus auch nicht an individuelle Wünsche des Bedieners anpassen. Es lässt sich nämlich feststellen, dass bei der Einstellung von manchen Maschinenparametern eines Mähdreschers oder einer anderen Erntemaschine, z.B. einem Feldhäcksler, unterschiedliche Kontrollstrategien möglich sind, die alle zu einem annehmbaren Erfolg führen. Ein Beispiel hierfür ist die Höheneinstellung einer Haspel. Es gibt verschiedene Höheneinstellungen der Haspel, abhängig von den Erntegutbedingungen, die jedoch von unterschiedlichen Bedienern erfahrungsgemäß auch unterschiedlich gewählt werden können. Falls eine automatische Steuerung nun Einstellungen der Haspel wählen sollte, die nicht den Vorstellungen des jeweiligen Bedieners entsprechen, wird die Akzeptanz der Steuerung nicht gut sein und der Bediener eher dahin tendieren, die Steuerung abzuschalten. Eine Feinabstimmung gemäß EP 0 928 554 A1 ist in diesem Fall auch nicht praktikabel, da die Steuerung bei unterschiedlichen Sensorwerten z.B. für die Höhe des stehenden Erntegutbestands auch unterschiedliche Haspelhöhen ausgeben muss, welche bei jeder Neueinstellung durch die Automatik durch den Bediener, also fortwährend, zu korrigieren wären. Eine ähnliche Entscheidungsfreiheit des Bedieners gibt es bei der Einstellung der Gebläsedrehzahl und des Gebläsebodenabstandes eines Feldhäckslers.

Es wurde auch vorgeschlagen, dass ein Bediener über eine Schnittstelle Eingaben hinsichtlich seiner Zufriedenheit mit dem gerade laufenden Ernteprozess bereitstellen kann, anhand derer ein Algorithmus die Einstellung von Arbeitsparametern einer Erntemaschine verbessert (EP 1 371 278 A2). Hierbei handelt es sich jedoch nicht um normale Eingaben, die ein Bediener zur Übersteuerung oder Korrektur des laufenden Prozesses durchführen würde, sondern um einen separaten Arbeitsschritt während einer Optimierungsprozedur zur anfänglichen Einstellung eines Mähdreschers bei Erntebeginn.

Auch wurde vorgeschlagen, bei einem Mähdrescher Sensoren für Erntegut- und Umgebungsparameter und das Ergebnis des Erntegutbearbeitungsprozesses bereitzustellen, deren Messwerte einem Fuzzy-Inferenzsystem zugeführt werden, das Dresch- und Reinigungsparameter basierend auf den Signalen der Sensoren für Erntegut- und Umgebungsparameter kontrolliert (EP 1 277 388 A1). Die Messwerte für das Ergebnis des Erntegutbearbeitungsprozesses dienen dazu, vom Fuzzy-Inferenzsystem verwendete Parameter selbsttätig zu adaptieren. Hier beruht die Anpassung des Algorithmus (d.h. der Parameter des Fuzzy-Inferenzsystems) auf kontinuierlich erfassten Messwerten für das Ergebnis des Erntegutbearbeitungsprozesses, was einerseits geeignete Sensoren erfordert, die nicht für alle benötigten Parameter zur Verfügung stehen und andererseits hohe Rechenleistung erfordert, da die Messwerte kontinuierlich einlaufen und somit auch fortwährend zu bearbeiten sind.

Schließlich wurde vorgeschlagen, einem Bediener über eine Bedienerschnittstelle eine Auswahlmöglichkeit eines Betriebsverhaltens einer Maschine bereitzustellen (DE 101 22 672 A1). Ein derartiges Betriebsverhalten ist insbesondere die Reaktion eines Aktors der Maschine auf eine Bedienereingabe hin. Diese Vorgehensweise würde jedoch verlangen, dass für den jeweiligen Bediener der Maschine geeignete Betriebsverhalten abgespeichert sind und der Bediener müsste zudem wissen, welches der abgespeicherten Betriebsverhalten für ihn geeignet ist. Eine derartige Vorgehensweise lässt sich bei dem erwähnten Beispiel der Haspelhöhensteuerung somit nicht praktikabel anwenden.

### Aufgabe

Die Aufgabe der vorliegenden Erfindung wird darin gesehen, eine gegenüber dem Stand der Technik verbesserte Anordnung zur Kontrolle eines Arbeitsparameters einer landwirtschaftlichen Erntemaschine, eine damit ausgerüstete Erntemaschine und ein entsprechendes Verfahren bereitzustellen, um die oben erwähnten Nachteile zu vermeiden oder zumindest zu vermindern.

### Lösung

Diese Aufgabe wird erfindungsgemäß durch die Lehre der Patentansprüche 1, 9 und 10 gelöst, wobei in den weiteren Patentansprüchen Merkmale aufgeführt sind, die die Lösung in vorteilhafter Weise weiterentwickeln.

Eine Anordnung zur selbsttätigen Kontrolle eines Arbeitsparameters einer Erntegutförderund/oder -bearbeitungseinrichtung einer landwirtschaftlichen Erntemaschine umfasst:
einen Sensor zur Erfassung von wenigstens einer Eigenschaft von Erntegut und/oder einer durch die Eigenschaft beeinflussten Größe,
eine Kontrolleinrichtung, die betreibbar ist, anhand der Signale des Sensors unter Anwendung eines Algorithmus sukzessive Steuersignale zur Ansteuerung eines Aktors zu bestimmen, welcher den Arbeitsparameter der mit dem sensierten Erntegut zusammenwirkenden Erntegutförder- und/oder-bearbeitungseinrichtung beeinflusst,
und eine Schnittstelle zur Eingabe von Korrektureingaben für den Arbeitsparameter durch einen das Arbeitsergebnis der Erntegutförder- und/oder-bearbeitungseinrichtung überwachenden Beobachter,
wobei die Kontrolleinrichtung mit der Schnittstelle verbunden und betreibbar ist, die dem Aktor zugeführten Kontrollsignale anhand der empfangenen Korrektureingaben zu übersteuern und anhand der Signale des Sensors und der diesen zugehörigen Korrektureingaben selbsttätig den von der Kontrolleinrichtung verwendeten Algorithmus zu modifizieren.

Mit anderen Worten kontrolliert eine Kontrolleinrichtung einen Aktor, der ein Steuersignal zur Ansteuerung eines Arbeitsparameters einer Erntegutförder- und/oder-bearbeitungseinrichtung erzeugt, basierend auf Signalen eines Sensors zur Erfassung einer beliebigen Eigenschaft des Ernteguts bzw. einer durch das Erntegut beeinflussten Größe, wozu ein Algorithmus verwendet wird. Zudem werden fortlaufend Korrektureingaben von einem das Arbeitsergebnis der Erntegutförder- und/oder-bearbeitungseinrichtung überwachenden Beobachter empfangen, die zur Übersteuerung des Steuersignals dienen. Der Algorithmus wird anhand der Signale des Sensors und der Korrektureingaben bei Bedarf (d.h. wenn die Korrektursignale die Notwendigkeit dazu implizieren) modifiziert, um zu erreichen, dass der Algorithmus an die Korrekturangaben angepasst wird und letztere nach einer gewissen Lernzeit nicht mehr benötigt werden.

Die Kontrolleinrichtung ist insbesondere betreibbar, den Algorithmus fortlaufend zu modifizieren. Dadurch erübrigt sich eine Rückstelltaste für einen Bedienerwechsel und es kann auch eine selbsttätige Anpassung an ein geändertes Bedienerverhalten erfolgen, das beispielsweise durch geänderte Erntebedingungen bedingt sein kann.

Die Kontrolleinrichtung kann einen Bewerter umfassen, der betreibbar ist, unter Berücksichtigung der Häufigkeit und Größe der Korrektureingaben eine Relevanz der Korrektureingaben zu berechnen. Zudem kann die Kontrolleinrichtung einen Anpasser umfassen, der betreibbar ist, den Algorithmus unter Berücksichtigung der Relevanz der Korrektureingabe zu modifizieren.

Die Kontrolleinrichtung kann betreibbar sein, zumindest zwei Zustände des Aktors zu kommandieren und der Anpasser kann betreibbar sein, die den Zuständen zugeordneten Signale des Sensors und/oder die Zustände des Aktors zu beeinflussen.

Es ist auch denkbar, dass die Kontrolleinrichtung betreibbar ist, als Algorithmus ein neuronales Netzwerk zu verwenden, in welchem anhand von Bedienereingaben eines erfahrenen Bedieners gelernte Wichtungen im Vorab verwendet werden und der Anpasser betreibbar ist, die gelernten Wichtungen zu modifizieren.

Der Sensor kann stromauf oder stromab der Erntegutförder- und/oder -bearbeitungseinrichtung mit dem Erntegut oder einem mit dem Erntegut interagierenden Element zusammenwirken. Die Schnittstelle kann eine Bedienereingabeeinrichtung und/oder einen Sensor umfassen. Im ersten Fall ist der Beobachter somit ein menschlicher Bediener, der mit seinen Sinnen (insbesondere Augen) die Erntegutförder- und/oder-bearbeitungseinrichtung überwacht und bei Abweichungen von einem ihm bekannten Sollverhalten die Korrektureingaben bereitstellt. Im anderen Fall ist die Schnittstelle mit einem Sensor verbunden, der die Aufgaben des Bedieners übernimmt und bei Bedarf die Korrektureingaben bereitstellt.

Der von der Kontrolleinrichtung kontrollierte Arbeitsparameter kann die Vorwärtsposition und/oder Höhe einer als Erntegutfördereinrichtung dienenden Haspel sein.

Die erfindungsgemäße Anordnung kann an beliebigen Erntemaschinen Verwendung finden, wie Mähdreschern oder Feldhäckslern, bei denen beispielsweise ein Arbeitsparameter eines Gebläses oder einer Körnernachbearbeitungseinrichtung kontrolliert werden kann.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht einer Erntemaschine, und
- Fig. 2: eine schematische Darstellung einer Anordnung zur Kontrolle eines Arbeitsparameters einer Erntegutfördereinrichtung der Erntemaschine.

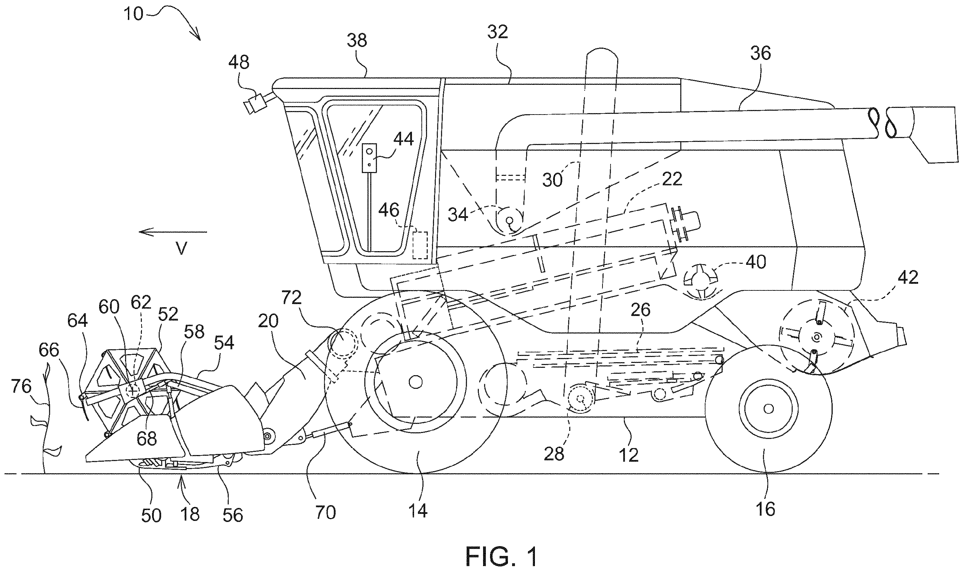

Die Figur 1 zeigt eine selbstfahrende Erntemaschine 10 in Form eines Mähdreschers mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels nicht gezeigter Antriebsmittel in Drehung versetzt, um die Erntemaschine 10 z. B. über ein abzuerntendes Feld zu bewegen. Im Folgenden beziehen sich Richtungsangaben, wie vorn und hinten, auf die Fahrtrichtung V der Erntemaschine 10 im Erntebetrieb, die in der Figur 1 nach links verläuft.

An den vorderen Endbereich der Erntemaschine 10 ist ein Erntevorsatz 18 in Form eines Schneidwerks abnehmbar angeschlossen, um beim Erntebetrieb Erntegut 76 in Form von Getreide oder andere, dreschbare Halmfrüchten von dem Feld zu ernten und es nach oben und hinten durch einen Schrägfördererzusammenbau 20 einem Axialdreschwerk 22 zuzuführen. Das im Axialdreschwerk 22 durch Dreschkörbe und Roste hindurchtretende, Körner und Verunreinigungen enthaltende Gemisch gelangt in eine Reinigungseinrichtung 26. Durch die Reinigungseinrichtung 26 gereinigtes Getreide wird mittels einer Körnerschnecke 28 einem Körnerelevator 30 zugeführt, der es in einen Korntank 32 befördert. Das gereinigte Getreide aus dem Korntank 32 kann durch ein Entladesystem mit einer Querschnecke 34 und einem als Schneckenfördererzusammenbau 36 ausgeführten Entladeförderer entladen werden. Die vom Axialdreschwerk 22 abgegebenen Erntegutreste werden mittels einer Fördertrommel 40 einem Strohhäcksler 42 zugeführt, der sie zerkleinert und über die Breite des Schneidwerks 18 über das Feld verteilt. Die genannten Systeme werden mittels eines Verbrennungsmotors angetrieben und von einem Bediener aus einer Fahrerkabine 38 heraus kontrolliert und gesteuert. Das dargestellte Axialdreschwerk 22 mit einem oder mehreren axialen Dresch- und Trennrotoren ist nur ein Ausführungsbeispiel und könnte beispielsweise durch ein Tangentialdreschwerk einer oder mehreren Dreschtrommeln und nachfolgendem Strohschüttler oder Trennrotor(en) ersetzt werden.

Das Schneidwerk 18 umfasst einen sich hin- und her bewegenden Messerbalken 50, der sich im Wesentlichen über die gesamte Breite des Schneidwerks 18 erstreckt. Eine Haspel 52 ist am Schneidwerk 18 oberhalb des Messerbalkens 50 angeordnet und erstreckt sich ebenfalls im Wesentlichen über die ganze Breite des Schneidwerks 18. Die äußeren Enden der Haspel 52 werden auf Armen 54 gelagert, von denen in der Figur 1 nur ein einziger gezeigt wird. Die Arme 54 umfassen rückwärtige Enden, die um sich quer zur Vorwärtsrichtung V erstreckende Achsen schwenkbar am sich über die Breite des Schneidwerks 18 erstreckenden Rahmen 56 des Schneidwerks 18 angelenkt sind und sich von dort aus nach vorn erstrecken. Jeder Arm 54 ist mit einem Aktor 58 in Form eines hydraulischen Zylinders gekoppelt, der schwenkbar am Rahmen 56 und am Arm 54 angelenkt ist. Die Arme 54 und somit die Haspel 52 werden durch Verstellen (Ein- und Ausziehen) des Aktors 58 angehoben und abgesenkt.

An einem um seine Mittelachse 62 in Drehung versetzbaren, mittleren Rohr 62 sind Zinkenträger 64 abgestützt, die sich ebenfalls über die Breite des Schneidwerks 18 erstrecken und an denen Finger 66 angebracht sind. Ein zweiter Aktor 68 in Form eines hydraulischen Zylinders dient zur horizontalen Verstellung der Haspel 52, indem er ein Lager des Rohres 62 entlang des Arms 54 verschiebt. Das Schneidwerk 18 umfasst weiterhin Querfördermittel, die in der Figur 1 nicht erkennbar sind, jedoch als Schneckenförderer oder Förderband ausgeführt sein können, um das durch den Messerbalken abgeschnittene Erntegut 76 zur Mitte des Schneidwerks 18 zu fördern und durch eine rückwärtige Öffnung im Rahmen 56 in den Schrägförderer 20 abzugeben. Die Höhe des Schneidwerks 18 über dem Erdboden wird durch einen dritten Aktor 70 vorgegeben, der den Schrägförderer 20 und somit das daran lösbar angebrachte Schneidwerk 18 um eine horizontale, quer zur Vorwärtsrichtung orientierte Achse 72 gegenüber dem Rahmen 12 der Erntemaschine 10 verschwenkt.

Im Stand der Technik erfolgt die Höheneinstellung der Haspel 52 durch einen Bediener, dem in seiner Kabine 38 eine Bedienereingabeeinrichtung 44 mit Tasten zur Verfügung gestellt wird. Die Bedienereingabeeinrichtung 44 ist mit einer Kontrolleinrichtung 46 verbunden, die ihrerseits den Aktor 58 kontrolliert. Drückt der Bediener die obere Taste der Bedienereinrichtung 44, wird die Haspel 52 angehoben und sie wird abgesenkt, solange der Bediener die untere Taste der Bedienereinrichtung 44 betätigt. Bei aufrecht stehendem Erntegut 76 wird der Bediener die Haspel 52 in horizontaler Richtung (durch weitere Tasten der Bedienereingabeeinrichtung 44, die über die Kontrolleinrichtung 44 den zweiten Aktor 58 kontrollieren) geringfügig vor dem Messerbalken 50 des Schneidwerks 18 positionieren.

Die vertikale Höhe wird durch den Bediener üblicherweise derart eingestellt, dass die Finger 66 der Haspel 52 etwas unterhalb der Ähren des stehenden Erntegutbestandes an den Getreidehalmen angreifen. Wenn die Haspel 52 zu hoch gestellt wird, kann sich Erntegut 76 auf dem Messerbalken 50 ansammeln. Bei korrekter Haspelhöhe kann der Messerbalken 50 das Erntegut 76 problemlos abschneiden und die Pflanzenhalme fallen mit den Ähren voraus zum Querförderer. Die Vorwärtsposition der Haspel 52 hängt vom jeweiligen Ertrag ab, d.h. die Haspel 52 wird bei hohen Durchsätzen weiter nach vorn gestellt. Bei Lagergetreide muss die Haspel 52 in vertikaler Richtung und bei schwierigen Bedingungen auch horizontal näher an den Messerbalken 50 geführt werden, um die Pflanzen in Richtung des Messerbalkens 50 und anschließend zum Querförderer zu fördern. Falls nur über einen Teil der Breite des Schneidwerks 18 Lagergetreide zu ernten ist, während auf der übrigen Breite stehendes Getreide einläuft, führt eine sehr niedrige Haspeleinstellung zur schlechtem Erntegutfluss und zu Verlusten bei dem stehenden Getreide. In diesem Fall wird eine Zwischenposition verwendet, um sowohl das Lagergetreide als auch die stehenden Halme vernünftig einzubringen.

Demnach ist erkennbar, dass die fortdauernde Anpassung der Position der Haspel 52 an die aktuellen Erntebedingungen eine den Bediener ermüdende Aufgabe ist, die spätestens nach einigen Stunden nicht mehr optimal geleistet werden kann, was zu nicht optimalen Ernteergebnissen führt. Eine Automatisierung ist im Stand der Technik (EP 2 681 984 A1) zwar bekannt, hat aber den Nachteil, dass sie vorgegebene Werte ausgibt, die nicht für alle Bediener akzeptabel erscheinen werden, denn bei gegebenen Erntegutbedingungen werden unterschiedliche Bediener erfahrungsgemäß auch unterschiedliche Höheneinstellungen der Haspel 52 wählen, die sämtlich zu brauchbaren Ergebnissen führen. Manche Bediener bevorzugen bei gegebenen Bedingungen unterschiedliche Höhen der Haspel 52 und führen sie häufiger und/oder bereits bei kleineren Höhenänderungen des Ernteguts 76 nach als andere Bediener.

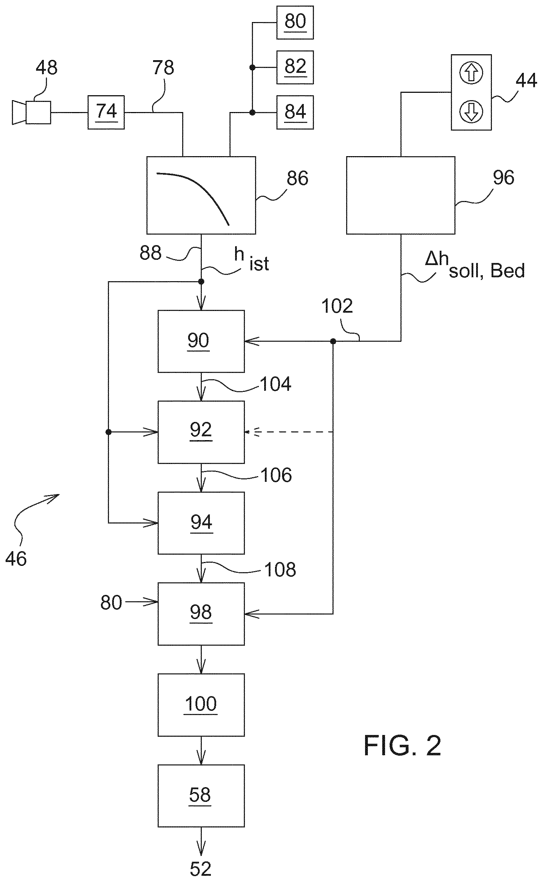

Um die Arbeit des Bedieners zu erleichtern und ihn von der fortlaufenden Verstellung der Höhe der Haspel 52 zu entlasten, ist die Erntemaschine 10 mit einer Anordnung zur selbsttätigen Kontrolle der Höhe der Haspel 52 ausgestattet, die in der Figur 2 schematisch dargestellt ist. Die Anordnung umfasst einen Sensor 48, der als Kamera mit einem Bildverarbeitungssystem 74 ausgeführt ist. Die Kamera blickt auf den stehenden Bestand des Ernteguts 76 vor dem Schneidwerk 18. Das Bildverarbeitungssystem analysiert die Bildsignale der Kamera und gibt im Betrieb Signale 78 aus, welche die Höhe der Oberseite des Ernteguts 76 über dem Boden repräsentieren. Ein geeigneter Sensor 48 wird in EP 2 681 984 A1 beschrieben. Der Sensor 48 könnte auch als Laserlaufzeitentfernungsmesser ausgeführt sein, wie in der DE 10 2008 043 716 A1 oder DE 102011 017621 A1 oder DE 102011 085 380 A1 beschrieben. Zudem kann die Drehgeschwindigkeit der Haspel 52 manuell oder selbsttätig gesteuert werden.

Eine Anzahl an Rückkopplungssensoren 80 bis 84 erfasst die Stellung der Aktoren 58, 68 und 70. Die Rückkopplungssensoren 80 bis 84 können die Stellung der Aktoren 58, 68, 70 selbst erfassen, d.h. als optische oder magnetische Sensoren ausgeführt sein, die mit der Kolbenstange des Aktors 58, 68, 70 zusammenwirken, oder sie erfassen die translatorische oder rotatorische Position eines vom Aktor 58, 68, 70 bewegten Elements, z.B. des Arms 54 um seine rückwärtige Drehachse.

Die Signale 78 des Sensors und die Signale der Rückkopplungssensoren 80 bis 84 werden einer Signalverarbeitung 86 zugeführt, welche anhand der bekannten Geometrie des Schneidwerks 18 und der Erntemaschine 10 einschließlich des Schrägförderers 20 und der Signale der Rückkopplungssensoren 80 bis 84 ausrechnet, in welcher Höhe über dem Boden sich ein Referenzpunkt der Haspel 52 befindet. Sollte das Schneidwerk 18 gegenüber dem Schrägförderer 20 durch einen zusätzlichen Aktor um eine horizontale, quer zur Vorwärtsrichtung V verlaufende Achse bewegbar sein (s. DE 295 19 842 U1), wäre dessen Stellung durch einen zusätzlichen Rückkopplungssensor zu erfassen und der Signalverarbeitung 86 zuzuführen und von dieser zu berücksichtigen. Der erwähnte Referenzpunkt kann beispielsweise das untere Ende eines Fingers 66 sein, der sich gerade in seiner vorderstmöglichen Stellung befindet, wie der Finger 66 in der Figur 1. Diese Höhe wird von der Höhe der Oberseite des Ernteguts 76 abgezogen, die anhand des Signals 78 bekannt ist. Die Signalverarbeitung 86 kann einen Tiefpass umfassen, um die Rauschanteile des ausgegebenen Signals 88 zu vermindern. Das von der Signalverarbeitung 86 ausgegebene Signal 88 entspricht demnach einem gemessenen vertikalen Abstand (hᵢₛₜ) zwischen dem Referenzpunkt der Haspel 52 und der Oberseite des Ernteguts 76.

Die Signale 88 enthalten, neben dem gemessenen vertikalen Abstand (hᵢₛₜ) zwischen dem Referenzpunkt der Haspel 52 und der Oberseite des Ernteguts 76, auch Information über die absolute Höhe des Ernteguts 76 bzw. den Anteil an Lagergetreide vor dem Schneidwerk 18. Diese Information kann durch den Sensor 48 und das Bildverarbeitungssystem 74 evaluiert und im Signal 88 bereitgestellt werden.

Das Signal 88 wird als Eingangssignal einem Bewerter 90, einem Anpasser 92 und einem Umsetzer 94 zugeführt, welche Bestandteil der Kontrolleinrichtung 46 sind. Der Bewerter 90 und optional auch der Anpasser 92 erhält zusätzlich Signale 102 von einer Vorverarbeitungsschaltung 96, die mit der Bedienerschnittstelle 44 verbunden ist. Die Signale 102 geben an, welche Korrektureingaben in Form von Höhenverstellwünschen (Δh_{soll, Bed.}) der Haspel 52 der Bediener ggf. gerade eingibt.

Die Signale 102 werden auch dem Bewerter 90 zugeführt. Letzterer erhält auch die Signale 88 und bestimmt eine Relevanz der Korrektureingaben (d.h. der Signale 102). Der Bewerter 90 hat demnach die Aufgabe herauszufinden, als wie bedeutend die Korrektureingaben anzusehen sind. Der Bewerter 90 kann hierbei davon ausgehen, dass Korrektureingaben umso relevanter sind, je häufiger sie kommen, denn das ist ein deutlicher Hinweis darauf, dass der Bediener mit der derzeitig selbsttätig eingestellten Höhe der Haspel 52 in großem Maße unzufrieden ist. Auch deutet eine größere Höhe (zeitliche Länge) der Korrektureingaben deutet darauf hin, dass der Bediener mit der derzeitig selbsttätig eingestellten Höhe der Haspel 52 in großem Maße unzufrieden ist. Sollten hingegen über längere Zeit keine Korrektureingaben einlaufen, kann der Bewerter 90 davon ausgehen, dass der Bediener mit der derzeit eingestellten Höhe der Haspel 52 einverstanden ist. Sollten nach einer längeren, korrektureingabenfreien Zeit wieder Korrektureingaben einlaufen, wird der Bewerter 90 diese somit zunächst ignorieren und erst dann, wenn viele Korrektureingaben einlaufen, davon ausgehen, dass sich Ernteguteigenschaften geändert haben oder ein Bedienerwechsel stattgefunden hat und die einlaufenden Korrektureingaben höher bewerten. Da der Bewerter 90 auch das Signal 88 einschließlich des gemessenen vertikalen Abstands (hᵢₛₜ) zwischen dem Referenzpunkt der Haspel 52 und der Oberseite des Ernteguts 76 und des Anteils an Lagergetreide vor dem Schneidwerk 18 erhält, kann der Bewerter 90 auch diese Größen bei der Bewertung der Korrektureingaben berücksichtigen. Hierbei kann berücksichtigt werden, dass die Signale 88 zeitlich gegenüber den Signalen 102 versetzt sein können, obwohl sie dasselbe Erntegut 76 betreffen und dieser zeitliche Versatz kann demnach ausgeglichen werden. Der Bewerter 90 kann demnach beispielsweise erkennen, ab welchem Lagergetreideanteil der Bediener die Haspel 52 absenkt. Auch kann der Bewerter 90 die unterschiedlichen Zustände des Schneidwerks 18, die sich in die Aufnahme normalen, stehenden Getreides und der Aufnahme von Lagergetreide und ggf. in di Aufnahme von gestörtem, d.h. teilweise niedergedrücktem oder abgeknicktem Getreide unterteilen lassen, erkennen und zugehörige Korrektureingaben unterschiedlich bewerten. Der Bewerter 90 kann sich bekannter Vorgehensweisen bedienen, um die Korrektureingaben zu bewerten, z.B. probabilistischer Vorgehensweisen (z.B. Bayes-Algorithmus) oder als Kalman-Filter ausgeführt sein.

Der Bewerter 90 gibt demnach Signale 104 ab, die darauf hindeuten, in welchem Maße eine Korrektureingabe als Unzufriedenheit des Bedieners mit dem derzeitigen Kontrollverhalten der Kontrolleinrichtung 46 angesehen werden kann. Diese Signale 104 werden dem Anpasser 92 zugeführt, der zudem mit den Signalen 88 und/oder 102 beaufschlagt werden kann. Der Anpasser 92 ist eingerichtet, einen vom Umsetzer 94 verwendeten Algorithmus abhängig von den Signalen 104 zu modifizieren, um schließlich zu erreichen, dass der Bediener, nachdem sein Korrekturverhalten gelernt und absorbiert wurde, nur noch wenig oder keine Korrektureingaben mehr vornehmen muss.

Der Anpasser 92 sendet demnach Signale 106 zur Modifizierung des vom Umsetzer 94 verwendeten Algorithmus, mit welchem der Umsetzer 94 die Signale 88 in Steuersignale 108 umsetzt, die über einen Treiber 98 und eine Ventileinheit 100 den Aktor 58 ansteuern. Der Treiber 98 erhält auch Rückkopplungs-Signale vom Sensor 80 zur Erfassung der aktuellen Position des Aktors 58 (um ihn in die gewünschte Position bringen zu können) und die Signale 102, welche ggf. die Signale 108 übersteuern.

Nach alledem lernt die Kontrolleinrichtung 46 während des Betriebs anhand der Korrektureingaben des Bedieners, in welcher Weise der vom Umsetzer verwendete Algorithmus, welcher in einer geeigneten Weise eine Relation zwischen den Signalen 88 und den Steuersignalen 108 repräsentiert, zu ändern ist, damit die Kontrolleinrichtung 46 den Wünschen des Bedieners entsprechend vorgeht. Die Steuersignale 108 basieren, insbesondere in der ersten Zeit nach einem Neustart der Erntemaschine 10 oder bei einer Änderung des Kontrollverhaltens des Bedieners, der durch sich ändernde Erntegutbedingungen oder einen Bedienerwechsel bedingt sein kann, in an sich bekannter Weise zunächst lediglich auf den Signalen 88, die mittels der Signale 102 übersteuert werden und der Algorithmus wird sukzessive durch die Korrektureingaben angepasst.

Bei der Auswahl des Algorithmus und seiner Anpassung an das Bedienerverhalten bestehen unterschiedliche Möglichkeiten. So könnte der Anpasser 92 eine Relation zwischen den Signalen 88 und den Steuersignalen 108, anhand denen der Umsetzer 94 während des Betriebs die Steuersignalen 108 erzeugt, unter mehreren abgespeicherten Relationen auswählen, um die den Wünschen des jeweiligen Bedieners am nächsten kommende Relation auszuwählen.

Bei einer anderen Ausführungsform kann der Algorithmus zwei oder mehr Zustände des Aktors 52 (die z.B. eine untere Einstellung für Lagergetreide und eine obere Einstellung für normalen Bestand darstellen können) vorsehen und der Anpasser 92 betreibbar sein, die den Zuständen zugeordneten Signale 88 und/oder die Zustände des Aktors 58 (d.h. die Höheneinstellung der Haspel 52) zu beeinflussen. Bei dieser Ausführungsform kann der Bewerter 90 erkennen, ob die Korrektureingaben eine Verstärkung der vom Umsetzer 94 gewählten Einstellung darstellen, d.h. eine geringfügige Anpassung der Höhe der Haspel 52 nach oben oder unten, und in diesem Fall die Ausgangswerte des Umsetzers 94 (Zustände des Aktors 58 für die Höheneinstellung der Haspel 52) verändern. Auch kann der Bewerter 90 erkennen, ob die Korrektureingaben eine Korrektur der vom Umsetzer 94 gewählten Einstellung darstellen, d.h. eine größere Anpassung der Höhe der Haspel 52 nach oben oder unten insbesondere im Fall, dass die Unterscheidung zwischen Lagergetreide und stehendem Bestand nicht korrekt war und in diesem Fall die Eingangswerte des Umsetzers 94 (die den Zuständen zugeordneten Signale 88) verändern.

Bei einer wiederum anderen Ausführungsform umfasst läuft im Umsetzer 94 ein Programm, welches ein neuronales Netzwerk realisiert, in welchem anhand von Bedienereingaben eines erfahrenen Bedieners gelernte Wichtungen im Vorab verwendet werden und wobei der Anpasser 92 die gelernten Wichtungen modifiziert.

Im Ergebnis erhält man eine automatisierte Höhensteuerung der Haspel 52, die sich selbsttätig adaptiv an das Verhalten des jeweiligen Bedieners anpasst und deren Akzeptanz höher als einer konventionellen Höhensteuerung sein wird.

Es sei schließlich noch angemerkt, dass die Bedienerschnittstelle 44 durch eine Sensorik ersetzt oder ergänzt werden könnte, welche die Arbeit der Haspel 52 überwacht und beispielsweise Wickeln von Erntegut an der Haspel 52 erkennt (s. EP 2 143 316 A1). Diese Sensorik könnte durch den Sensor 48 und die Bildverarbeitung 74 realisiert werden und bei Bedarf die Korrektureingaben (Signal 102) bereitstellen, die ggf. durch die Eingaben des Bedieners ergänzt werden können.

## Patentansprüche

1. Anordnung zur selbsttätigen Kontrolle eines Arbeitsparameters einer Erntegutförderund/oder -bearbeitungseinrichtung einer landwirtschaftlichen Erntemaschine (10), umfassend:
einen Sensor (48) zur Erfassung von wenigstens einer Eigenschaft von Erntegut und/oder einer durch die Eigenschaft beeinflussten Größe,
eine Kontrolleinrichtung (46), die betreibbar ist, anhand der Signale des Sensors (48) unter Anwendung eines Algorithmus sukzessive Steuersignale (108) zur Ansteuerung eines Aktors (58) zu bestimmen, welcher den Arbeitsparameter der mit dem sensierten Erntegut zusammenwirkenden Erntegutförder- und/oderbearbeitungseinrichtung beeinflusst,
und eine Schnittstelle zur Eingabe von Korrektureingaben für den Arbeitsparameter durch einen das Arbeitsergebnis der Erntegutförder- und/oderbearbeitungseinrichtung überwachenden Beobachter,
wobei die Kontrolleinrichtung (46) mit der Schnittstelle verbunden und betreibbar ist, die dem Aktor (58) zugeführten Kontrollsignale anhand der empfangenen Korrektureingaben zu übersteuern,
**dadurch gekennzeichnet, dass** die Kontrolleinrichtung (46) betreibbar ist, anhand der Signale des Sensors (48) und der diesen zugehörigen Korrektureingaben selbsttätig den von der Kontrolleinrichtung (46) verwendeten Algorithmus zu modifizieren.

2. Anordnung nach Anspruch 1, wobei die Kontrolleinrichtung (46) betreibbar ist, den Algorithmus fortlaufend zu modifizieren.

3. Anordnung nach Anspruch 1 oder 2, wobei die Kontrolleinrichtung (46) einen Bewerter (90) umfasst, der betreibbar ist, unter Berücksichtigung der Häufigkeit und Größe der Korrektureingaben eine Relevanz der Korrektureingaben zu berechnen, und dass die Kontrolleinrichtung einen Anpasser (92) umfasst, der betreibbar ist, den Algorithmus unter Berücksichtigung der Relevanz der Korrektureingabe zu modifizieren.

4. Anordnung nach Anspruch 3, wobei die Kontrolleinrichtung (46) betreibbar ist, zumindest zwei Zustände des Aktors (58) zu kommandieren und der Anpasser (92) betreibbar ist, die den Zuständen zugeordneten Signale des Sensors (48) und/oder die Zustände des Aktors (58) zu beeinflussen.

5. Anordnung nach Anspruch 3, wobei die Kontrolleinrichtung (46) betreibbar ist, als Algorithmus ein neuronales Netzwerk zu verwenden, in welchem anhand von Bedienereingaben eines erfahrenen Bedieners gelernte Wichtungen im Vorab verwendet werden und wobei der Anpasser (92) betreibbar ist, die gelernten Wichtungen zu modifizieren.

6. Anordnung nach einem der vorhergehenden Ansprüche, wobei der Sensor (48) stromauf oder stromab der Erntegutförder- und/oder-bearbeitungseinrichtung mit dem Erntegut oder einem mit dem Erntegut interagierenden Element zusammenwirkt.

7. Anordnung nach einem der vorhergehenden Ansprüche, wobei die Schnittstelle eine Bedienereingabeeinrichtung (44) und/oder einen Sensor (48) umfasst.

8. Anordnung nach einem der vorhergehenden Ansprüche, wobei der von der Kontrolleinrichtung (46) kontrollierte Arbeitsparameter die Vorwärtsposition und/oder Höhe einer als Erntegutfördereinrichtung dienenden Haspel (52) ist.

9. Erntemaschine (10) mit einer Anordnung nach einem der vorhergehenden Ansprüche.

10. Verfahren zur selbsttätigen Kontrolle eines Arbeitsparameters einer Erntegutförderund/oder -bearbeitungseinrichtung einer landwirtschaftlichen Erntemaschine (10), umfassend folgende Schritte:
Erfassen von wenigstens einer Eigenschaft von Erntegut und/oder einer durch die Eigenschaft beeinflussten Größe durch einen Sensor (48),
sukzessives Bestimmen von Steuersignalen (108) zur Ansteuerung eines Aktors (58), welcher den Arbeitsparameter der mit dem sensierten Erntegut zusammenwirkenden Erntegutförder- und/oder-bearbeitungseinrichtung beeinflusst, durch eine Kontrolleinrichtung (46) anhand der Signale des Sensors (48) unter Anwendung eines Algorithmus,
Erhalten von Korrektureingaben für den Arbeitsparameter durch einen das Arbeitsergebnis der Erntegutförder- und/oder-bearbeitungseinrichtung überwachenden Beobachter über eine Schnittstelle,
wobei die Kontrolleinrichtung (46) mit der Schnittstelle verbunden ist und die dem Aktor (58) zugeführten Kontrollsignale anhand der empfangenen Korrektureingaben übersteuert,
**dadurch gekennzeichnet, dass** die Kontrolleinrichtung (46) anhand der Signale des Sensors (48) und der diesen zugehörigen Korrektureingaben selbsttätig den von der Kontrolleinrichtung (46) verwendeten Algorithmus modifiziert.

## Claims

1. Arrangement for automatically controlling a work parameter of a crop conveying and/or processing device of an agricultural harvester (10), comprising:
a sensor (48) for capturing at least one property of crops and/or a variable influenced by the property,
a control device (46) which can be operated to determine successive control signals (108) for controlling an actuator (58) on the basis of the signals from the sensor (48) using an algorithm, which actuator influences the work parameter of the crop conveying and/or processing device interacting with the sensed crops,
and an interface for inputting correction inputs for the work parameter by an observer monitoring the work result of the crop conveying and/or processing device,
wherein the control device (46) is connected to the interface and can be operated to override the control signals supplied to the actuator (58) on the basis of the received correction inputs,
**characterized in that** the control device (46) can be operated to automatically modify the algorithm used by the control device (46) on the basis of the signals from the sensor (48) and the correction inputs associated therewith.

2. Arrangement according to Claim 1, wherein the control device (46) can be operated to continuously modify the algorithm.

3. Arrangement according to Claim 1 or 2, wherein the control device (46) comprises an evaluator (90) which can be operated to calculate a relevance of the correction inputs taking into account the frequency and magnitude of the correction inputs, and in that the control device comprises an adapter (92) which can be operated to modify the algorithm taking into account the relevance of the correction input.

4. Arrangement according to Claim 3, wherein the control device (46) can be operated to command at least two states of the actuator (58), and the adapter (92) can be operated to influence the signals from the sensor (48) which are assigned to the states and/or to influence the states of the actuator (58).

5. Arrangement according to Claim 3, wherein the control device (46) can be operated to use a neural network as the algorithm, in which weightings learnt on the basis of operator inputs by an experienced operator are used in advance, and wherein the adapter (92) can be operated to modify the learnt weightings.

6. Arrangement according to one of the preceding claims, wherein the sensor (48) interacts with the crops or an element interacting with the crops upstream or downstream of the crop conveying and/or processing device.

7. Arrangement according to one of the preceding claims, wherein the interface comprises an operator input device (44) and/or a sensor (48).

8. Arrangement according to one of the preceding claims, wherein the work parameter controlled by the control device (46) is the forward position and/or height of a reel (52) used as the crop conveying device.

9. Harvester (10) having an arrangement according to one of the preceding claims.

10. Method for automatically controlling a work parameter of a crop conveying and/or processing device of an agricultural harvester (10), comprising the following steps of:
capturing at least one property of crops and/or a variable which is influenced by the property by means of a sensor (48),
successively determining control signals (108) for controlling an actuator (58), which influences the work parameter of the crop conveying and/or processing device interacting with the sensed crops, by means of a control device (46) on the basis of the signals from the sensor (48) using an algorithm,
receiving correction inputs for the work parameter from an observer monitoring the work result of the crop conveying and/or processing device via an interface,
wherein the control device (46) is connected to the interface and overrides the control signals supplied to the actuator (58) on the basis of the received correction inputs,
**characterized in that** the control device (46) automatically modifies the algorithm used by the control device (46) on the basis of the signals from the sensor (48) and the correction inputs associated therewith.

## Revendications

1. Arrangement de contrôle automatique d'un paramètre de travail d'un dispositif de convoyage et/ou de traitement de produit récolté d'une moissonneuse agricole (10), comprenant :
un capteur (48) destiné à acquérir au moins une propriété du produit récolté et/ou d'une grandeur influencée par la propriété,
un dispositif de contrôle (46) qui peut être utilisé pour déterminer, à l'aide des signaux du capteur (48) en utilisant un algorithme, des signaux de commande (108) successifs destinés à commander un actionneur (58) qui influence le paramètre de travail du dispositif de convoyage et/ou de traitement de produit récolté qui coopère avec le produit récolté détecté,
et une interface destinée à la saisie de saisies de correction pour le paramètre de travail par un observateur qui supervise le résultat du travail du dispositif de convoyage et/ou de traitement de produit récolté,
le dispositif de contrôle (46) étant relié à l'interface et pouvant être utilisé pour commander en priorité l'actionneur (58) par rapport aux signaux de contrôle qui lui sont acheminés à l'aide des saisies de correction saisies,
**caractérisé en ce que** le dispositif de contrôle (46) peut être utilisé pour modifier automatiquement l'algorithme utilisé par le dispositif de contrôle (46) à l'aide des signaux du capteur (48) et des saisies de correction qui sont associées à ceux-ci.

2. Arrangement selon la revendication 1, le dispositif de contrôle (46) pouvant être utilisé pour modifier continuellement l'algorithme.

3. Arrangement selon la revendication 1 ou 2, le dispositif de contrôle (46) comprenant un évaluateur (90) qui peut être utilisé pour calculer une pertinence des saisies de correction en tenant compte de la fréquence et de l'amplitude des saisies de correction, et en ce que le dispositif de correction comprend un adaptateur (92) qui peut être utilisé pour modifier l'algorithme en tenant compte de la pertinence des saisies de correction.

4. Arrangement selon la revendication 3, le dispositif de contrôle (46) pouvant être utilisé pour commander au moins deux états de l'actionneur (58) et l'adaptateur (92) pouvant être utilisé pour influencer les signaux du capteur (48) associés aux états et/ou les états de l'actionneur (58).

5. Arrangement selon la revendication 3, le dispositif de contrôle (46) pouvant être utilisé pour utiliser comme algorithme un réseau neuronal, dans lequel sont utilisées à l'avance des pondérations apprises à l'aide de saisies d'utilisateur d'un utilisateur expérimenté et l'adaptateur (92) pouvant être utilisé pour modifier les pondérations apprises.

6. Arrangement selon l'une des revendications précédentes, le capteur (48) coopérant en amont ou en aval du dispositif de convoyage et/ou de traitement de produit récolté avec le produit récolté ou avec un élément qui interagit avec le produit récolté.

7. Arrangement selon l'une des revendications précédentes, l'interface comprenant un dispositif de saisie d'utilisateur (44) et/ou un capteur (48).

8. Arrangement selon l'une des revendications précédentes, le paramètre de travail contrôlé par le dispositif de contrôle (46) étant la position vers l'avant et/ou la hauteur d'un rabatteur (52) servant de dispositif de convoyage de produit récolté.

9. Moissonneuse (10) comprenant un arrangement selon l'une des revendications précédentes.

10. Procédé de contrôle automatique d'un paramètre de travail d'un dispositif de convoyage et/ou de traitement de produit récolté d'une moissonneuse agricole (10), comprenant les étapes suivantes :
acquisition d'au moins une propriété du produit récolté et/ou d'une grandeur influencée par la propriété par un capteur (48),
détermination successive de signaux de commande (108) destinés à commander un actionneur (58) qui influence le paramètre de travail du dispositif de convoyage et/ou de traitement de produit récolté qui coopère avec le produit récolté détecté, par un dispositif de contrôle (46) à l'aide des signaux du capteur (48) en utilisant un algorithme,
obtention de saisies de correction pour le paramètre de travail par un observateur qui supervise le résultat du travail du dispositif de convoyage et/ou de traitement de produit récolté par le biais d'une interface,
le dispositif de contrôle (46) étant relié à l'interface et commandant en priorité l'actionneur (58) par rapport aux signaux de contrôle qui lui sont acheminés à l'aide des saisies de correction saisies,
**caractérisé en ce que** le dispositif de contrôle (46) modifie automatiquement l'algorithme utilisé par le dispositif de contrôle (46) à l'aide des signaux du capteur (48) et des saisies de correction qui sont associées à ceux-ci.
